# EUROPEAN PATENT APPLICATION

(11) **EP 4 465 711 A1**
(43) Date of publication of application: **20.11.2024**
(21) Application number: 23739995.1
(22) Date of filing: 10.01.2023
(51) Int. Cl.: H04W 64/00

(54) **COMMUNICATION NETWORK PREDICTION METHOD, AND TERMINAL AND NETWORK-SIDE DEVICE**

(30) Priority: 14.01.2022 CN 202210044930
(71) Applicant: VIVO MOBILE COMMUNICATION CO., LTD., Dongguan, Guangdong 523863 (CN)
(72) Inventor: JIA, Chenglu, Dongguan, Guangdong 523863 (CN); YANG, Ang, Dongguan, Guangdong 523863 (CN)
(74) Representative: Murgitroyd & Company
(86) International application number: PCT/CN2023/071486
(87) International publication number: WO 2023/134653

(57) **Abstract**

This application discloses a communication network prediction method, a terminal, and a network-side device, pertaining to the field of communication technologies. The communication network prediction method in embodiments of this application includes: performing, by a terminal, a target task by using L models respectively and obtaining a first result output by the L models, where L is a positive integer; and performing, by the terminal, any one of the following operations: determining, by the terminal, a prediction result of the target task based on the first result; sending, by the terminal, the first result to a network-side device; and receiving, by the terminal, a second result sent by the network-side device; and determining, by the terminal, a prediction result of the target task based on the first result and the second result; where the second result is obtained by the network-side device by performing the target task using M models respectively, M being a positive integer.

## Description

### CROSS-REFERENCE TO RELATED APPLICATIONS

This application claims priority to Chinese Patent Application No. 202210044930.1, filed on January 14, 2022, and entitled "COMMUNICATION NETWORK PREDICTION METHOD, TERMINAL, AND NETWORK-SIDE DEVICE", which is incorporated herein by reference in its entirety.

### TECHNICAL FIELD

This application pertains to the field of communications technologies, and in particular, relates to a communication network prediction method, a terminal, and a network-side device.

### BACKGROUND

Location information is an important type of sensing information, which can not only be used to meet requirements of diverse services, such as sidelink (sidelink) or smart factory, but also be used as a-priori information of a communication link to help improve overall performance and service experience of the communication system. Wireless communication network positioning allows a terminal to estimate its current geographical location through reference signal measurement. Specifically, the terminal performs measurement on positioning reference signals from a plurality of positioning base stations, and reports measurement information of the positioning reference signals to a core network through a serving base station, and position estimation is performed by a positioning management function in the core network. Finally, the core network sends geographic location information of the terminal to the terminal through the serving base station to implement positioning of the terminal.

In the related art, a wireless communication network positioning method mainly relies on a measurement result of a direct path, which can achieve high positioning precision with low implementation complexity in presence of a line-of-sight (line-of-sight, LOS) path. However, this is easily affected by non-line-of-sight (non-line-of-sight, NLOS), especially when no direct path is present between a terminal and a positioning base station, positioning precision is greatly reduced, resulting in a high probability of positioning failures. Actually, an artificial intelligence (Artificial Intelligence, AI) or machine learning (Machine Learning, ML)-based positioning method can resolve the positioning problem in a case of NLOS. However, the stability, robustness and generalization capability of the AI-based positioning method are still important factors restricting its large-scale application. Therefore, how to effectively improve the positioning precision and reduce the failure probability is a problem to be urgently resolved.

### SUMMARY

Embodiments of this application provide a communication network prediction method, a terminal, and network-side device, so as to resolve the problem of high positioning failure probability.

According to a first aspect, a communication network prediction method is provided, where the method includes:
performing, by a terminal, a target task by using L models respectively and obtaining a first result output by the L models, where L is a positive integer; and
performing, by the terminal, any one of the following operations:
   determining, by the terminal, a prediction result of the target task based on the first result;
   sending, by the terminal, the first result to a network-side device; and
   receiving, by the terminal, a second result sent by the network-side device; and determining, by the terminal, a prediction result of the target task based on the first result and the second result; where the second result is obtained by the network-side device by performing the target task using M models respectively, M being a positive integer.

According to a second aspect, a communication network prediction method is provided, where the method includes:
performing, by a network-side device, a target task by using M models respectively and obtaining a second result output by the M models, where M is a positive integer; and
performing, by the network-side device, any one of the following operations:
   determining, by the network-side device, a prediction result of the target task based on the second result;
   sending, by the network-side device, the second result to a terminal; and
   receiving, by the network-side device, a first result sent by the terminal; and determining, by the network-side device, a prediction result of the target task based on the first result and the second result, where the first result is obtained by the terminal by performing the target task using L models respectively, L being a positive integer.

According to a third aspect, a communication network prediction apparatus is provided, where the apparatus includes:
a first execution module, configured to perform a target task by using L models respectively and obtain a first result output by the L models, where L is a positive integer; and
a first prediction module, configured to perform any one of the following operations:
   determining, by the terminal, a prediction result of the target task based on the first result;
   sending, by the terminal, the first result to a network-side device; and
   receiving, by the terminal, a second result sent by the network-side device; and determining, by the terminal, a prediction result of the target task based on the first result and the second result; where the second result is obtained by the network-side device by performing the target task using M models respectively, M being a positive integer.

According to a fourth aspect, a communication network prediction apparatus is provided, where the apparatus includes:
a second execution module, configured to perform a target task by using M models respectively and obtain a second result output by the M models, where M is a positive integer; and
a second prediction module, configured to perform any one of the following operations:
   determining, by the network-side device, a prediction result of the target task based on the second result;
   sending, by the network-side device, the second result to a terminal; and
   receiving, by the network-side device, a first result sent by the terminal; and determining, by the network-side device, a prediction result of the target task based on the first result and the second result, where the first result is obtained by the terminal by performing the target task using L models respectively, L being a positive integer.

According to a fifth aspect, a terminal is provided, where the terminal includes a processor and a memory, and a program or instructions executable on the processor are stored in the memory. When the program or the instructions are executed by the processor, the steps of the method according to the first aspect are implemented.

According to a sixth aspect, a terminal is provided, including a processor and a communication interface, where the processor is configured to:
perform a target task by using L models respectively and obtain a first result output by the L models, where L is a positive integer; and perform at least one of the following operations:
determining, by the terminal, a prediction result of the target task based on the first result;
sending, by the terminal, the first result to a network-side device; and
receiving, by the terminal, a second result sent by the network-side device; and determining, by the terminal, a prediction result of the target task based on the first result and the second result; where the second result is obtained by the network-side device by performing the target task using M models respectively, M being a positive integer.

According to a seventh aspect, a network-side device is provided, where the network-side device includes a processor and a memory, and a program or instructions executable on the processor are stored in the memory. When the program or the instructions are executed by the processor, the steps of the method according to the second aspect are implemented.

According to an eighth aspect, a network-side device is provided, including a processor and a communication interface, where the processor is configured to:
perform a target task by using M models respectively and obtain a second result output by the M models, where M is a positive integer; and perform at least one of the following operations:
determining, by the network-side device, a prediction result of the target task based on the second result;
sending, by the network-side device, the second result to a terminal; and
receiving, by the network-side device, a first result sent by the terminal; and determining, by the network-side device, a prediction result of the target task based on the first result and the second result, where the first result is obtained by the terminal by performing the target task using L models respectively, L being a positive integer.

According to a ninth aspect, a communication network prediction system is provided, including: a terminal and a network-side device, where the terminal may be configured to perform the steps of the method according to the first aspect, and the network-side device may be configured to perform the steps of the method according to the second aspect.

According to a tenth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to an eleventh aspect, a chip is provided, where the chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In the embodiments of this application, a same task is performed by using a plurality of models respectively in a communication network, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

### BRIEF DESCRIPTION OF DRAWINGS

FIG. 1 is a schematic diagram of a wireless communication system to which embodiments of this application are applicable;
FIG. 2 is a first schematic flowchart of a communication network prediction method according to an embodiment of this application;
FIG. 3 is a second schematic flowchart of a communication network prediction method according to an embodiment of this application;
FIG. 4 is a first schematic structural diagram of a communication network prediction apparatus according to an embodiment of this application;
FIG. 5 is a second schematic structural diagram of a communication network prediction apparatus according to an embodiment of this application;
FIG. 6 is a schematic structural diagram of a communication device according to an embodiment of this application;
FIG. 7 is a schematic structural diagram of a terminal according to an embodiment of this application;
FIG. 8 is a first schematic structural diagram of a network-side device according to an embodiment of this application; and
FIG. 9 is a second schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

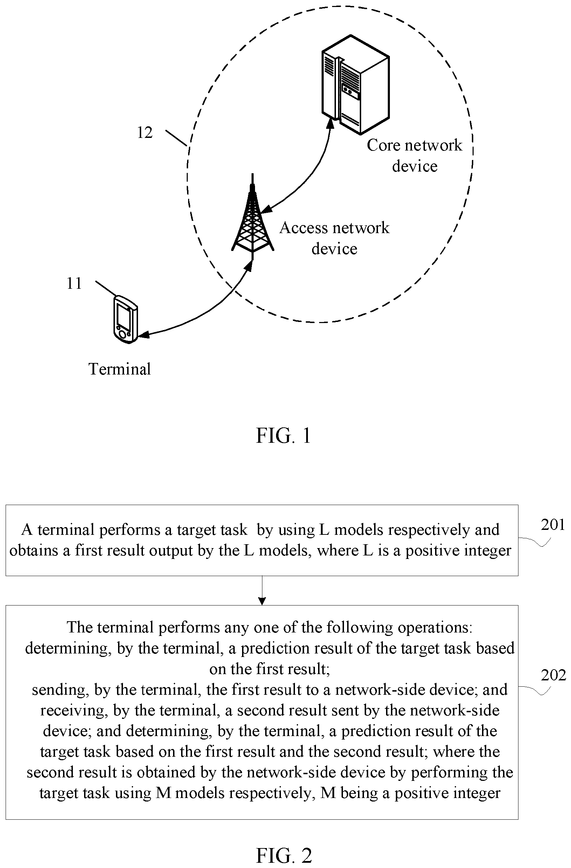

FIG. 1 is a schematic diagram of a wireless communication system to which embodiments of this application are applicable. The wireless communication system shown in FIG. 1 includes a terminal 11 and a network-side device 12. The terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, and/or a neural network processing node, where the access network device 12 may also be referred to as a radio access network device, a radio access network (Radio Access Network, RAN), a radio access network function, or a radio access network unit. The access network device 12 may include a base station, a WLAN access point or a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS),a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application service discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network storage function (Network Repository Function, NRF), a network exposure function (Network Exposure Function, NEF), a local NEF (Local NEF, or L-NEF), a binding support function (Binding Support Function, BSF), an application Function (Application Function, AF), and the like. It should be noted that, in the embodiments of this application, a core network device in an NR system is used as an example for description, and a specific type of the core network device is not limited.

The following describes in detail a communication network prediction method provided in the embodiments of this application by using some embodiments and application scenarios thereof with reference to the accompanying drawings.

The embodiments of this application provide a communication network prediction method. A same task is performed by using a plurality of models respectively in a communication network, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

FIG. 2 is a first schematic flowchart of a communication network prediction method according to an embodiment of this application. As shown in FIG. 2, the method includes steps 201 and 202.

Step 201: A terminal performs a target task by using L models respectively and obtains a first result output by the L models, where L is a positive integer.

Step 202: The terminal performs any one of the following operations:
determining, by the terminal, a prediction result of the target task based on the first result;
sending, by the terminal, the first result to a network-side device; and
receiving, by the terminal, a second result sent by the network-side device; and determining, by the terminal, a prediction result of the target task based on the first result and the second result; where the second result is obtained by the network-side device by performing the target task using M models respectively, M being a positive integer.

It should be noted that this embodiment of this application can be applied to a model-based prediction scenario in a communication network. The terminal includes, but is not limited to, the types of terminals 11 listed above. The network-side device includes, but is not limited to, the types of the network-side devices 12 listed above. For example, the network-side device includes at least one of the following: a core network node, an access network node (such as a base station), and a neural network processing node. The core network node is, for example, a network data analytics function (Network Data Analytics Function, NWDAF) network element and/or a location service management function (location management function, LMF) network element.

It can be understood that the target task performed by the model in this embodiment of this application may include a task such as positioning and/or channel state information (Channel State Information, CSI) estimation.

Optionally, the type of any one of the L models includes an AI-based model or a non-AI-based model. The type of any one of the M models includes an AI-based model or a non-AI-based model. Specifically, the non-AI-based model may include a wireless communication network positioning method based on a measurement result of a direct path, and the like. The AI-based model may include at least one of the following: a convolutional neuron network with attention (CNN with attention) model; and a vision transformer (Vision Transformer) model.

Actually, the terminal uses the L models to perform the target task, and each model outputs its own output result. Optionally, the first result may include L output results respectively output by the L models, or a fusion result of the L output results.

Optionally, the second result sent by the network-side device may include M output results respectively output by the M models, or a fusion result of the M output results.

Optionally, after determining the prediction result of the target task based on the first result, the terminal makes a decision associated with the target task based on the prediction result of the target task.

In the communication network prediction method in this embodiment of this application, a same task is performed by using a plurality of models respectively in a communication network, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

The following describes specific implementations of the model deployment mode and the task prediction mode in this embodiment of this application. The specific implementations of the model deployment mode and the task prediction mode may include any one of the following manners:
Manner 1: The terminal determines a prediction result of the target task based on a plurality of models deployed in the terminal.
Manner 2: The network-side device determines a prediction result of the target task based on a plurality of models deployed in the network-side device.
Manner 3: The terminal obtains a first result output by L models based on the L models deployed in the terminal; the network-side device obtains a second result output by M models based on the M models deployed in the network-side device, and sends the second result to the terminal; and the terminal determines a prediction result of the target task based on the first result and the second result.
Manner 4: The terminal obtains a first result output by L models based on the L models deployed in the terminal, and sends the first result to the network-side device; the network-side device obtains a second result output by the M models based on the M models deployed in the network-side device; and the network-side device determines a prediction result of the target task based on the first result and the second result.

It can be understood that the number and types of models used by the terminal may be different for different tasks in different manners. For different tasks in different manners, the number and types of models used by the network-side device may also be different.

Herein, manner 1 to manner 4 will be described.

Manner 1: The terminal determines a prediction result of the target task based on a plurality of models deployed in the terminal.

Specifically, the terminal determines L models; the terminal performs a target task by using the L models respectively and obtains a first result output by the L models; and the terminal determines a prediction result of the target task based on the first result. Further, the terminal makes a decision associated with the target task based on the prediction result of the target task.

Optionally, the implementation of determining the L models by the terminal may include any one of the following:
(1) The network-side device directly configures a plurality of models for the terminal.

For example, the network-side device proactively sends first information to the terminal, and the first information includes configuration information of the L models. The terminal receives the first information sent by the network-side device, and determines the L models based on the configuration information of the L models.

Optionally, after receiving the first information sent by the network-side device, the terminal sends feedback information to the network-side device, where the feedback information is used to indicate whether the terminal supports a model corresponding to the model configuration information. Based on the feedback information reported by the terminal, the network-side device learns whether the terminal indicates a model corresponding to the model configuration information.

Optionally, the first information includes at least one of the following:
(a) model quantity information;
(b) model type information;
(c) model identification (ID) information;
(d) model priority information;
(e) model attribute information; where
   specifically, the model attribute information may include at least one of the following: parameter model, non-parameter model, AI model, non-AI model, model error, and whether the model needs fine tuning;
(f) model precision information;
(g) model error information;
(h) model computing capability requirement information;
(i) model storage capacity requirement information;
(j) model feature information; where
   for example, the model feature information may include at least one of the following: model structure, model parameter (for example, model weight and/or model offset), model configuration (for example, an optimizer and/or loss function used by the model), and model optimizer status;
(k) adaptive environment information; where
   for example, the adaptive environment information includes at least one of the following: LOS or NLOS scenario, dense urban or rural scenario, Internet of things (Internet of Things, IoT) scenario, and sidelink scenario;
(l) processing delay information;
(m) fusion manner information for output results of models; where
   for example, the fusion manner information of output results of models includes a post-processing mode; and actually, the post-processing mode may include a further data processing manner such as filtering and weighting;
(n) model life cycle information; where
   for example, the model life cycle information may include at least one of the following: a model validity time, a model invalidity time, a model update cycle, and an association between a model and a target task;
(o) measurement quantity information input by various types of models; where
   specifically, the measurement quantity information input by the various types of models may include at least one of the following: channel state information, received signal information, historical state information, and sensor information;
   for example, the channel state information may include at least one of the following: time domain information, frequency domain information, space domain information, delay domain information, and Doppler domain information;
   for example, the received signal information is used to describe signal quality and/or characteristics; and the received signal information may include at least one of the following: RSRP, RSRQ, SINR, bit error rate, and frame error rate; and
   for example, the historical state information may include historical position information of past N moments; and
(p) output information of various types of models.

Specifically, the output information of the of various types of models may include at least one of the following: direct target parameter, intermediate quantity, and soft information of direct target parameter or intermediate quantity. The soft information is information such as a probability distribution of terminal location.

For example, the direct target parameter may include relative location information and/or absolute location information.

For example, the intermediate quantity is used to derive a target parameter. The intermediate quantity may include at least one of the following: time of arrival information (TOA), angle information (such as AOA and AOD), and RSRP.

(2) The terminal requests the network-side device to configure a plurality of models for the terminal.

Specifically, the terminal sends request information to the network-side device, where the request information is used for requesting the network-side device to configure L models.

The network-side device receives the request information sent by the terminal; the network-side device configures the L models for the terminal based on the request information and/or third information, and the network-side device sends the first information to the terminal; and
the terminal receives the first information sent by the network-side device, and determines the L models based on the configuration information of the L models.

Optionally, the request information may include second information, where the second information includes at least one of the following:
(a) mobility information of the terminal;
   specifically, the mobility information of the terminal may include a moving speed and/or beam switching information; for example, the moving speed of the terminal is greater than a first threshold; and for another example, a beam switching frequency is greater than a second threshold;
(b) environment information of the terminal; where
   specifically, the environment information of the terminal may include at least one of the following: LOS/NLOS scenario, dense urban/rural scenario, the number of surrounding base stations, base station ID, and measurement information of a reference signal;
(c) precision requirement information; where
   specifically, the precision requirement information may include at least one of the following: absolute precision requirement and precision quantization level; where the absolute precision requirement may include: horizontal error and/or vertical height error; and
(d) task information.

Specifically, the task information is used to indicate a task performed by using a model. The task information may include a positioning task or a CSI estimation task.

Optionally, the terminal may report the capability information of the terminal to the network-side device.

Specifically, the terminal sends third information to the network-side device, where the third information is used to indicate capability information of the terminal. The third information includes at least one of the following:
(a) sensor configuration information of the terminal;
(b) a data type available to the terminal; where
   for example, the data type may include at least one of the following: data format information and data preprocessing mode; and
   data available to the terminal may include data associated with sensor configuration and/or data associated with a reference signal; where the data associated with sensor configuration includes: picture information captured by a visual sensor, distance information captured by a radar sensor, and so on; and the data associated with the reference signal includes channel state information; and
(c) hardware capability information of the terminal.

For example, the hardware capability information of the terminal includes at least one of the following: CPU and/or GPU capability (such as a computing capability), space for storing a data set or an amount of data that can be stored, and CPU and GPU resources used for performing tasks.

It should be noted that the third information may be reported before the second information, for example, the terminal reports the third information at an initial access stage. The third information may alternatively be reported simultaneously as the second information; or the third information may be reported later than the second information.

(3) The terminal autonomously configures a plurality of models.

Specifically, the terminal configures the L models based on at least one way of autonomously determining and informing the network-side device, protocol pre-definition, or higher-layer pre-configuration. For example, the terminal autonomously configures the L models; or the L models are pre-defined by the protocol or pre-configured by the higher layer.

(4) The terminal selects a plurality of models from a pre-configured model pool.

Specifically, the model pool includes at least one model. For example, the terminal selects the L models from the model pool based on target information, where the model pool includes K models, K being greater than or equal to L, and K being a positive integer.

Optionally, the target information may include at least one of the following:

### (a) Statistical information of an output result of each model

Specifically, the statistical information of the output result of each model includes: statistical information of results of a same model in a period of time. For example, statistical information that is input and output for different models in a period of time is calculated separately. The statistical information is, for example, a mean or a variance.

### (b) Statistical information of output results of a plurality of models

Specifically, the statistical information of output results of a plurality of models includes: statistical information of statistics output by different models in a period of time. The statistical information is, for example, a mean or a variance.

### (c) Model error information of each model

For example, the model error information of each model includes instantaneous error information and/or statistical error information within a period of time.

### (d) Mobility information of the terminal

Specifically, the mobility information of the terminal may include a moving speed and/or beam switching information. For example, the moving speed of the terminal is greater than a first threshold; and for another example, a beam switching frequency is greater than a second threshold.

### (e) Environment information of the terminal

Specifically, the environment information of the terminal may include at least one of the following: LOS/NLOS scenario, dense urban/rural scenario, the number of surrounding base stations, base station ID, and measurement information of a reference signal.

### (f) Precision requirement information

Specifically, the precision requirement information may include at least one of the following: absolute precision requirement and precision quantization level; where the absolute precision requirement may include: horizontal error and/or vertical height error.

### (g) Task information

Specifically, the task information is used to indicate a task performed by a model. The task information may include a positioning task or a CSI estimation task.

### (h) Measurement quantity information input by various types of models

Specifically, the measurement quantity information input by the various types of models may include at least one of the following: channel state information, received signal information, historical state information, and sensor information.

For example, the channel state information may include at least one of the following: time domain information, frequency domain information, space domain information, delay domain information, and Doppler domain information.

For example, the received signal information is used to describe signal quality and/or characteristics; and the received signal information may include at least one of the following: RSRP, RSRQ, SINR, bit error rate, and frame error rate.

For example, the historical state information may include historical position information of past N moments.

### (i) Model priority information

### (j) Measurement information of a reference signal of a current terminal

Specifically, the measurement information of the reference signal of the current terminal may include at least one of the following: SSB measurement information, SRS measurement information, CSI-RS measurement information, and PRS measurement information.

### (k) Model configuration information of a reference terminal

Optionally, the reference terminal includes a peripheral terminal of the current terminal, such as a transmit terminal or a receive terminal in a sidelink scenario.

### (1) Measurement information of a reference signal of a reference terminal

Specifically, the measurement information of the reference signal of the reference terminal may include at least one of the following: SSB measurement information, SRS measurement information, CSI-RS measurement information, and PRS measurement information.

Manner 2: The network-side device determines a prediction result of the target task based on a plurality of models deployed in the network-side device.

Specifically, the network-side device determines M models; then, the network-side device performs a target task by using the M models respectively and obtains a second result output by the M models; and the network-side device determines the prediction result of the target task based on the second result. Further, the network-side device makes a decision associated with the target task based on the prediction result of the target task.

Optionally, the implementation of determining the M models by the network-side device may include any one of the following:

### (1) The network-side device configures a plurality of models.

For example, the network-side device configures M models based on at least one way of autonomously determining, protocol pre-definition, or pre-configuration.

Optionally, in a scenario in which the network-side device determines M models, the network-side device may obtain fifth information and/or sixth information from the terminal. The fifth information and/or the sixth information may be used to assist network-side device in model selection and model configuration.

Specifically, the terminal sends the fifth information to the network-side device; and the network-side device receives the fifth information sent by the terminal; where the fifth information includes at least one of the following:

### (a) Mobility information of the terminal

Specifically, the mobility information of the terminal may include a moving speed and/or beam switching information. For example, the moving speed of the terminal is greater than a first threshold; and for another example, a beam switching frequency is greater than a second threshold.

### (b) Environment information of the terminal

Specifically, the environment information of the terminal may include at least one of the following: LOS/NLOS scenario, dense urban/rural scenario, the number of surrounding base stations, base station ID, and measurement information of a reference signal.

### (c) Precision requirement information

Specifically, the precision requirement information may include at least one of the following: absolute precision requirement and precision quantization level; where the absolute precision requirement may include: horizontal error and/or vertical height error.

### (d) Task information

Specifically, the task information is used to indicate a task performed by the model. The task information may include a positioning task or a CSI estimation task.

Optionally, the terminal may report the capability information of the terminal to the network-side device. For example, the terminal sends the sixth information to the network-side device, and the network-side device receives the sixth information sent by the terminal, where the sixth information is used to indicate the capability information of the terminal. The sixth information may include at least one of the following:
(a) Sensor configuration information of the terminal
(b) Data type obtainable by the terminal

For example, the data type may include at least one of the following: data format information and data preprocessing mode.

Data available to the terminal may include data associated with the sensor configuration and/or data associated with a reference signal. The data associated with sensor configuration includes: picture information captured by a visual sensor, distance information captured by a radar sensor, and so on. The data associated with the reference signal includes channel state information.

### (c) Hardware capability information of the terminal

For example, the hardware capability information of the terminal includes at least one of the following: CPU and/or GPU capability (such as a computing capability), space for storing a data set or an amount of data that can be stored, and CPU and GPU resources used for performing tasks.

It should be noted that the sixth information may be reported before the fifth information, for example, the terminal reports the sixth information at an initial access stage. The sixth information may alternatively be reported simultaneously as the fifth information; or the sixth information may be reported later than the fifth information.

### (2) The network-side device selects a plurality of models from a pre-configured model pool.

Specifically, the model pool includes at least one model. For example, the network-side device selects the M models from a model pool based on target information, where the model pool includes P models, P being greater than or equal to M, and P being a positive integer.

Optionally, the target information may include at least one of the following:

### (a) Statistical information of an output result of each model

Specifically, the statistical information of the output result of each model includes: statistical information of results of a same model in a period of time. For example, statistical information that is input and output for different models in a period of time is calculated separately. The statistical information is, for example, a mean or a variance.

### (b) Statistical information of output results of a plurality of models

Specifically, the statistical information of output results of a plurality of models includes: statistical information of statistics output by different models in a period of time. The statistical information is, for example, a mean or a variance.

### (c) Model error information of each model

For example, the model error information of each model includes instantaneous error information and/or statistical error information within a period of time.

### (d) Mobility information of the terminal

Specifically, the mobility information of the terminal may include a moving speed and/or beam switching information. For example, the moving speed of the terminal is greater than a first threshold; and for another example, a beam switching frequency is greater than a second threshold.

### (e) Environment information of the terminal

Specifically, the environment information of the terminal may include at least one of the following: LOS/NLOS scenario, dense urban/rural scenario, the number of surrounding base stations, base station ID, and measurement information of a reference signal.

### (f) Precision requirement information

Specifically, the precision requirement information may include at least one of the following: absolute precision requirement and precision quantization level; where the absolute precision requirement may include: horizontal error and/or vertical height error.

### (g) Task information

Specifically, the task information is used to indicate a task performed by the model. The task information may include a positioning task or a CSI estimation task.

### (h) Measurement quantity information input by various types of models

Specifically, the measurement quantity information input by the various types of models may include at least one of the following: channel state information, received signal information, historical state information, and sensor information.

For example, the channel state information may include at least one of the following: time domain information, frequency domain information, space domain information, delay domain information, and Doppler domain information.

For example, the received signal information is used to describe signal quality and/or characteristics; and the received signal information may include at least one of the following: RSRP, RSRQ, SINR, bit error rate, and frame error rate.

For example, the historical state information may include historical position information of past N moments.

### (i) Model priority information

### (j) Measurement information of a reference signal of a current terminal

Specifically, the measurement information of the reference signal of the current terminal may include at least one of the following: SSB measurement information, SRS measurement information, CSI-RS measurement information, and PRS measurement information.

### (k) Model configuration information of a reference terminal

Optionally, the reference terminal includes a peripheral terminal of the current terminal, such as a transmit terminal or a receive terminal in a sidelink scenario.

### (1) Measurement information of a reference signal of a reference terminal

Specifically, the measurement information of the reference signal of the reference terminal may include at least one of the following: SSB measurement information, SRS measurement information, CSI-RS measurement information, and PRS measurement information.

Optionally, the network-side device sends seventh information to the terminal after determining the M models; where the seventh information includes configuration information of the M models.

The terminal receives the seventh information sent by the network-side device, and obtains a measurement quantity corresponding to the M models based on the configuration information of the M models included in the seventh information; and the terminal sends measurement quantity information to the network-side device.

The network-side device receives the measurement quantity information sent by the terminal, and performs the target task by using the M models respectively based on the measurement quantity information sent by the terminal and obtains a second result output by the M models.

Specifically, the seventh information may include at least one of the following:

### [1] Input requirements for models

Actually, input requirements of various models may include at least one of the following: measurement quantity information input by various types of models.

For example, the measurement quantity information input by the various types of models may include at least one of the following: channel state information, received signal information, historical state information, and sensor information.

The channel state information may include at least one of the following: time domain information, frequency domain information, space domain information, delay domain information, and Doppler domain information.

The received signal information is used to describe signal quality and/or characteristics; and the received signal information may include at least one of the following: RSRP, RSRQ, SINR, bit error rate, and frame error rate.

The historical state information may include historical position information of past N moments.

For example, the data types input by the various types of models may include at least one of the following: data format information and data preprocessing mode. The data available to the terminal may include data associated with sensor configuration and/or data associated with a reference signal. The data associated with sensor configuration includes: picture information captured by a vision sensor, distance information captured by a radar sensor, and the like. The data associated with the reference signal includes channel state information.
[2] Model precision information
[3] Processing delay information
[4] Model life cycle information

Actually, the model life cycle information may include at least one of the following: a model validity time, a model invalidity time, a model update cycle, and an association between a model and a target task.

Optionally, the implementation of determining, by the network-side device, a prediction result of the target task based on the second result may include: determining, by the network-side device, the prediction result of the target task based on a second fusion manner and the second result.

Specifically, the second fusion manner may include at least one of the following:
(1) performing filtering on an output result of each model to obtain a prediction result; and
(2) determining a prediction result based on a weight and an output result of each model.

Optionally, the network-side device determines the second fusion manner based on target information.

Specifically, the target information may include at least one of the following:

### (a) Statistical information of an output result of each model

Specifically, the statistical information of the output result of each model includes: statistical information of results of a same model in a period of time. For example, statistical information that is input and output for different models in a period of time is calculated separately. The statistical information is, for example, a mean or a variance.

### (b) Statistical information of output results of a plurality of models

Specifically, the statistical information of output results of a plurality of models includes: statistical information of statistics output by different models in a period of time. The statistical information is, for example, a mean or a variance.

### (c) Model error information of each model

For example, the model error information of each model includes instantaneous error information and/or statistical error information within a period of time.

### (d) Mobility information of the terminal

Specifically, the mobility information of the terminal may include a moving speed and/or beam switching information. For example, the moving speed of the terminal is greater than a first threshold; and for another example, a beam switching frequency is greater than a second threshold.

### (e) Environment information of the terminal

Specifically, the environment information of the terminal may include at least one of the following: LOS/NLOS scenario, dense urban/rural scenario, the number of surrounding base stations, base station ID, and measurement information of a reference signal.

### (f) Precision requirement information

Specifically, the precision requirement information may include at least one of the following: absolute precision requirement and precision quantization level; where the absolute precision requirement may include: horizontal error and/or vertical height error.

### (g) Task information

Specifically, the task information is used to indicate a task performed by the model. The task information may include a positioning task or a CSI estimation task.

### (h) Measurement quantity information input by various types of models

Specifically, the measurement quantity information input by the various types of models may include at least one of the following: channel state information, received signal information, historical state information, and sensor information.

For example, the channel state information may include at least one of the following: time domain information, frequency domain information, space domain information, delay domain information, and Doppler domain information.

For example, the received signal information is used to describe signal quality and/or characteristics; and the received signal information may include at least one of the following: RSRP, RSRQ, SINR, bit error rate, and frame error rate.

For example, the historical state information may include historical position information of past N moments.

### (i) Model priority information

### (j) Measurement information of a reference signal

Specifically, the measurement information of the reference signal may include at least one of the following: SSB measurement information, SRS measurement information, CSI-RS measurement information, and PRS measurement information.

Mode 3: A plurality of models are deployed separately on the terminal side and the network-side device side, and the terminal determines a prediction result of the target task.

Specifically, the terminal determines L models; and the network-side device determines M models. The terminal obtains a first result output by the L models based on the L models deployed in the terminal. The network-side device obtains a second result output by M models based on the M models deployed in the network-side device, and sends the second result to the terminal. The terminal determines a prediction result of the target task based on the first result and the second result. Further, the terminal makes a decision associated with the target task based on the prediction result of the target task.

Optionally, the network-side device may send eleventh information to the terminal, where the eleventh information is used to indicate a prediction mode based on the first result and the second result. The terminal receives the eleventh information sent by the network-side device.

The prediction mode includes any one of the following:
(1) Terminal-centered and network-side device-assisted mode:
   The terminal determines the prediction result of the target task based on the first result and the second result.
(2) Network-side device-centered and terminal-assisted mode:
   the network-side device determines the prediction result of the target task based on the first result and the second result.

It can be understood that a prediction mode corresponding to mode 3 is a terminal-centered and network-side device-assisted mode.

Optionally, the implementation of determining, by the terminal, a prediction result of the target task based on the first result and the second result may include: determining, by the terminal, the prediction result of the target task based on a first fusion manner, the first result, and the second result.

Specifically, the first fusion manner may include at least one of the following:
(1) performing filtering on an output result of each model to obtain a prediction result; and
(2) determining a prediction result based on a weight and an output result of each model.

Optionally, the terminal determines the first fusion manner based on target information.

Optionally, the target information may include at least one of the following:

### (a) Statistical information of an output result of each model

Specifically, the statistical information of the output result of each model includes: statistical information of results of a same model in a period of time. For example, statistical information that is input and output for different models in a period of time is calculated separately. The statistical information is, for example, a mean or a variance.

### (b) Statistical information of output results of a plurality of models

Specifically, the statistical information of output results of a plurality of models includes: statistical information of statistics output by different models in a period of time. The statistical information is, for example, a mean or a variance.

### (c) Model error information of each model

For example, the model error information of each model includes instantaneous error information and/or statistical error information within a period of time.

### (d) Mobility information of the terminal

Specifically, the mobility information of the terminal may include a moving speed and/or beam switching information. For example, the moving speed of the terminal is greater than a first threshold; and for another example, a beam switching frequency is greater than a second threshold.

### (e) Environment information of the terminal

Specifically, the environment information of the terminal may include at least one of the following: LOS/NLOS scenario, dense urban/rural scenario, the number of surrounding base stations, base station ID, and measurement information of a reference signal.

### (f) Precision requirement information

Specifically, the precision requirement information may include at least one of the following: absolute precision requirement and precision quantization level; where the absolute precision requirement may include: horizontal error and/or vertical height error.

### (g) Task information

Specifically, the task information is used to indicate a task performed by the model. The task information may include a positioning task or a CSI estimation task.

### (h) Measurement quantity information input by various types of models

Specifically, the measurement quantity information input by the various types of models may include at least one of the following: channel state information, received signal information, historical state information, and sensor information.

For example, the channel state information may include at least one of the following: time domain information, frequency domain information, space domain information, delay domain information, and Doppler domain information.

For example, the received signal information is used to describe signal quality and/or characteristics; and the received signal information may include at least one of the following: RSRP, RSRQ, SINR, bit error rate, and frame error rate.

For example, the historical state information may include historical position information of past N moments.

### (i) Model priority information

### (j) Measurement information of a reference signal of a current terminal

Specifically, the measurement information of the reference signal of the current terminal may include at least one of the following: SSB measurement information, SRS measurement information, CSI-RS measurement information, and PRS measurement information.

### (k) Model configuration information of a reference terminal

Optionally, the reference terminal includes a peripheral terminal of the current terminal, such as a transmit terminal or a receive terminal in a sidelink scenario.

### (1) Measurement information of a reference signal of a reference terminal

Specifically, the measurement information of the reference signal of the reference terminal may include at least one of the following: SSB measurement information, SRS measurement information, CSI-RS measurement information, and PRS measurement information.

Mode 4: A plurality of models are deployed separately on the terminal side and the network-side device side, and the network-side device determines a prediction result of the target task.

Specifically, the terminal determines L models; and the network-side device determines M models. The terminal obtains a first result output by the L models based on the L models deployed in the terminal, and sends the first result to the network-side device. The network-side device obtains a second result output by the M models based on the M models deployed in the network-side device; and the network-side device determines a prediction result of the target task based on the first result and the second result. Further, the network-side device makes a decision associated with the target task based on the prediction result of the target task.

Optionally, the network-side device may send eleventh information to the terminal, where the eleventh information is used to indicate a prediction mode based on the first result and the second result. The terminal receives the eleventh information sent by the network-side device.

The prediction mode includes any one of the following:

### (1) Terminal-centered and network-side device-assisted mode:

The terminal determines the prediction result of the target task based on the first result and the second result.

### (2) Network-side device-centered and terminal-assisted mode:

The network-side device determines the prediction result of the target task based on the first result and the second result.

It can be understood that a prediction mode corresponding to Mode 4 is a network-side device-centered and terminal-assisted mode.

Optionally, the implementation of determining, by the network-side device, the prediction result of the target task based on the first result and the second result may include: determining, by the network-side device, the prediction result of the target task based on a second fusion manner, the first result, and the second result.

Specifically, the second fusion manner may include at least one of the following:
(1) performing filtering on an output result of each model to obtain a prediction result; and
(2) determining a prediction result based on a weight and an output result of each model.

Optionally, the network-side device determines the second fusion manner based on target information.

Specifically, the target information may include at least one of the following:

### (a) Statistical information of an output result of each model

Specifically, the statistical information of the output result of each model includes: statistical information of results of a same model in a period of time. For example, statistical information that is input and output for different models in a period of time is calculated separately. The statistical information is, for example, a mean or a variance.

### (b) Statistical information of output results of a plurality of models

Specifically, the statistical information of output results of a plurality of models includes: statistical information of statistics output by different models in a period of time. The statistical information is, for example, a mean or a variance.

### (c) Model error information of each model

For example, the model error information of each model includes instantaneous error information and/or statistical error information within a period of time.

### (d) Mobility information of the terminal

Specifically, the mobility information of the terminal may include a moving speed and/or beam switching information. For example, the moving speed of the terminal is greater than a first threshold; and for another example, a beam switching frequency is greater than a second threshold.

### (e) Environment information of the terminal

Specifically, the environment information of the terminal may include at least one of the following: LOS/NLOS scenario, dense urban/rural scenario, the number of surrounding base stations, base station ID, and measurement information of a reference signal.

### (f) Precision requirement information

Specifically, the precision requirement information may include at least one of the following: absolute precision requirement and precision quantization level; where the absolute precision requirement may include: horizontal error and/or vertical height error.

### (g) Task information

Specifically, the task information is used to indicate a task performed by the model. The task information may include a positioning task or a CSI estimation task.

### (h) Measurement quantity information input by various types of models

Specifically, the measurement quantity information input by the various types of models may include at least one of the following: channel state information, received signal information, historical state information, and sensor information.

For example, the channel state information may include at least one of the following: time domain information, frequency domain information, space domain information, delay domain information, and Doppler domain information.

For example, the received signal information is used to describe signal quality and/or characteristics; and the received signal information may include at least one of the following: RSRP, RSRQ, SINR, bit error rate, and frame error rate.

For example, the historical state information may include historical position information of past N moments.

### (i) Model priority information

### (j) Measurement information of a reference signal

Specifically, the measurement information of the reference signal may include at least one of the following: SSB measurement information, SRS measurement information, CSI-RS measurement information, and PRS measurement information.

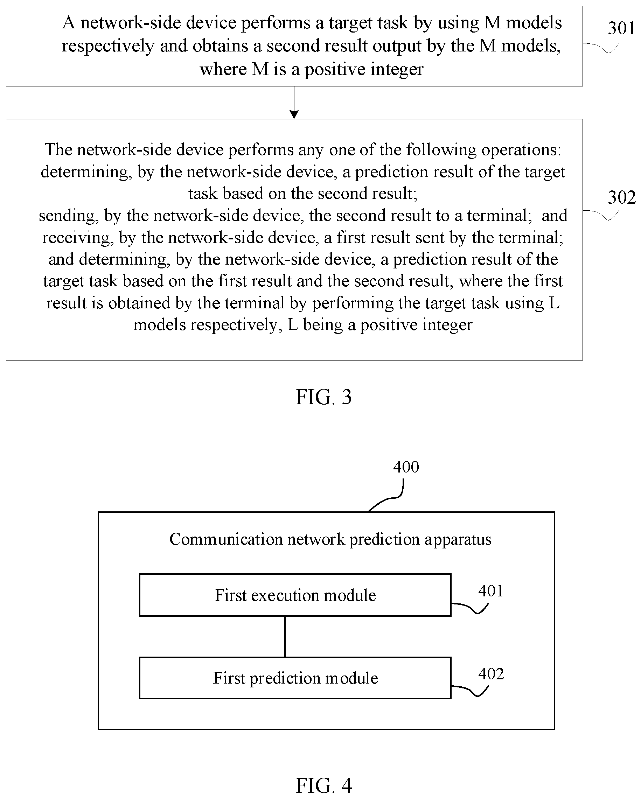

FIG. 3 is a second schematic flowchart of a communication network prediction method according to an embodiment of this application. As shown in FIG. 3, the method includes steps 301 and 302.

Step 301: A network-side device performs a target task by using M models respectively and obtains a second result output by the M models, where M is a positive integer.

Step 302: The network-side device performs any one of the following operations:
determining, by the network-side device, a prediction result of the target task based on the second result;
sending, by the network-side device, the second result to a terminal; and
receiving, by the network-side device, a first result sent by the terminal; and determining, by the network-side device, a prediction result of the target task based on the first result and the second result, where the first result is obtained by the terminal by performing the target task using L models respectively, L being a positive integer.

It should be noted that this embodiment of this application can be applied to a model-based prediction scenario in a communication network. The terminal includes, but is not limited to, the types of terminals 11 listed above. The network-side device includes, but is not limited to, the types of the network-side devices 12 listed above. For example, the network-side device includes at least one of the following: a core network node, an access network node (such as a base station), and a neural network processing node. The core network node is, for example, a network data analytics function (Network Data Analytics Function, NWDAF) network element and/or a location service management function (location management function, LMF) network element.

It can be understood that the target task performed by the model in this embodiment of this application may include a task such as positioning and/or channel state information (Channel State Information, CSI) estimation.

Optionally, the type of any one of the L models includes an AI-based model or a non-AI-based model. The type of any one of the M models includes an AI-based model or a non-AI-based model. Specifically, the non-AI-based model may include a wireless communication network positioning method based on a measurement result of a direct path, and the like. The AI-based model may include at least one of the following: a convolutional neuron network with attention (CNN with attention) model; and a vision transformer (Vision Transformer) model.

Actually, the terminal uses the L models to perform the target task, and each model outputs its own output result. Optionally, the first result may include L output results respectively output by the L models, or a fusion result of the L output results.

Optionally, the second result sent by the network-side device may include M output results respectively output by the M models, or a fusion result of the M output results.

Optionally, after determining the prediction result of the target task based on the first result, the terminal makes a decision associated with the target task based on the prediction result of the target task.

In the communication network prediction method in this embodiment of this application, a same task is performed by using a plurality of models in a communication network respectively, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

Optionally, the method further includes:
sending, by the network-side device, first information to the terminal, where the first information includes configuration information of the L models, and the configuration information of the L models is used for determining the L models by the terminal;
   or
receiving, by the network-side device, request information sent by the terminal, where the request information is used for requesting the network-side device to configure the L models; configuring, by the network-side device, the L models based on the request information and/or third information; and sending, by the network-side device, first information to the terminal, where the first information includes configuration information of the L models, and the configuration information of the L models is used for determining the L models by the terminal.

Optionally, the first information includes at least one of the following:
model quantity information;
model type information;
model identification ID information;
model priority information;
model attribute information;
model precision information;
model error information;
model computing capability requirement information;
model storage capacity requirement information;
model feature information;
adaptive environment information;
processing delay information;
fusion manner information for output results of models;
model life cycle information;
measurement quantity information input by various types of models; and
output information of various types of models.

Optionally, the measurement quantity information input by various types of models includes at least one of the following:
channel state information;
received signal information;
historical state information; and
sensor information.

Optionally, the output information of various types of models includes at least one of the following:
direct target parameter;
intermediate quantity; and
soft information of the direct target parameter.

Optionally, the request information includes second information, where the second information includes at least one of the following:
mobility information of the terminal;
environment information of the terminal;
precision requirement information; and
task information.

Optionally, the method further includes:
receiving, by the network-side device, third information sent by the terminal; where the third information is used to indicate capability information of the terminal.

Optionally, the third information includes at least one of the following:
sensor configuration information of the terminal;
a data type available to the terminal; and
hardware capability information of the terminal.

Optionally, the data type includes at least one of the following:
data format information; and
data preprocessing mode.

Optionally, after the network-side device sends the first information to the terminal, the method further includes:
receiving, by the network-side device, feedback information sent by the terminal, where the feedback information is used to indicate whether the terminal supports a model corresponding to the model configuration information.

Optionally, the method further includes:
determining, by the network-side device, the M models.

Optionally, the determining, by the network-side device, the M models includes:
configuring, by the network-side device, the M models based on at least one way of autonomously determining, protocol pre-definition, or pre-configuration;
   or
selecting, by the network-side device, the M models from a model pool based on target information, where the model pool includes P models, P being greater than or equal to M, and P being a positive integer.

Optionally, the method further includes:
receiving, by the network-side device, fifth information sent by the terminal, where the fifth information includes at least one of the following:
mobility information of the terminal;
environment information of the terminal;
precision requirement information; and
task information.

Optionally, the method further includes:
receiving, by the network-side device, sixth information sent by the terminal; where the sixth information is used to indicate capability information of the terminal.

Optionally, the sixth information includes at least one of the following:
sensor configuration information of the terminal;
a data type available to the terminal; and
hardware capability information of the terminal.

Optionally, the data type includes at least one of the following:
data format information; and
data preprocessing mode.

Optionally, the method further includes:
sending, by the network-side device, seventh information to the terminal, where the seventh information includes configuration information of the M models.

Optionally, the seventh information includes at least one of the following:
input requirements for models;
model precision information;
processing delay information; and
model life cycle information.

Optionally, the method further includes:
receiving, by the network-side device, measurement quantity information sent by the terminal.

Optionally, that the network-side device performs the target task by using the M models respectively and obtains the second result output by the M models includes:
performing, by the network-side device, the target task by using the M models respectively based on the measurement quantity information sent by the terminal, and obtaining the second result output by the M models.

Optionally, the determining, by the network-side device, a prediction result of the target task based on the second result includes: determining, by the network-side device, the prediction result of the target task based on a second fusion manner and the second result; or
the determining, by the network-side device, a prediction result of the target task based on the first result and the second result includes: determining, by the network-side device, the prediction result of the target task based on a second fusion manner, the first result, and the second result.

Optionally, the second fusion manner includes:
performing filtering on an output result of each model to obtain a prediction result; and/or
determining a prediction result based on a weight and an output result of each model.

Optionally, the method further includes:
determining, by the network-side device, the second fusion manner based on target information.

Optionally, the target information includes at least one of the following:
statistical information of an output result of each model;
statistical information of output results of a plurality of models;
model error information of each model;
mobility information of the terminal;
environment information of the terminal;
precision requirement information;
task information;
measurement quantity information input by various types of models;
model priority information; and
measurement information of a reference signal.

Optionally, the method further includes:
making, by the network-side device, a decision associated with the target task based on the prediction result of the target task.

Optionally, the second result includes:
M output results respectively output by the M models, or a fusion result of the M output results.

Optionally, the method further includes:
sending, by the network-side device, eleventh information to the terminal, where the eleventh information is used to indicate a prediction mode based on the first result and the second result.

Optionally, the prediction mode includes any one of the following:
determining, by the network-side device, the prediction result of the target task based on the first result and the second result; and
determining, by the terminal, the prediction result of the target task based on the first result and the second result.

For the communication network prediction method provided in the embodiments of this application, the execution subject can be a communication network prediction apparatus. In the embodiments of this application, the communication network prediction method being performed by the communication network prediction apparatus is used as an example to describe the communication network prediction apparatus provided in the embodiments of this application.

FIG. 4 is a first schematic structural diagram of a communication network prediction apparatus according to an embodiment of this application. As shown in FIG. 4, the communication network prediction apparatus 400 is applied to a terminal and includes:
a first execution module 401, configured to perform a target task by using L models respectively and obtain a first result output by the L models, where L is a positive integer; and
a first prediction module 402, configured to perform any one of the following operations:
   determining, by the terminal, a prediction result of the target task based on the first result;
   sending, by the terminal, the first result to a network-side device; and
   receiving, by the terminal, a second result sent by the network-side device; and determining, by the terminal, a prediction result of the target task based on the first result and the second result; where the second result is obtained by the network-side device by performing the target task using M models respectively, M being a positive integer.

The communication network prediction apparatus in this embodiment of this application performs a same task by using a plurality of models in a communication network respectively, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

Optionally, the apparatus further includes:
a first determining module, configured to determine the L models.

Optionally, the first determining module is specifically configured to perform any one of the following:
receiving first information sent by the network-side device, where the first information includes configuration information of the L models; and determining the L models based on the configuration information of the L models;
sending request information to the network-side device, where the request information is used for requesting the network-side device to configure the L models; receiving the first information sent by the network-side device, where the first information includes configuration information of the L models; and determining the L models based on the configuration information of the L models;
configuring the L models based on at least one way of autonomously determining and informing the network-side device, protocol pre-definition, or higher-layer pre-configuration; and
selecting the L models from a model pool based on target information, where the model pool includes K models, K being greater than or equal to L, and K being a positive integer.

Optionally, the first information includes at least one of the following:
model quantity information;
model type information;
model identification ID information;
model priority information;
model attribute information;
model precision information;
model error information;
model computing capability requirement information;
model storage capacity requirement information;
model feature information;
adaptive environment information;
processing delay information;
fusion manner information for output results of models;
model life cycle information;
measurement quantity information input by various types of models; and
output information of various types of models.

Optionally, the measurement quantity information input by various types of models includes at least one of the following:
channel state information;
received signal information;
historical state information; and
sensor information.

Optionally, the output information of various types of models includes at least one of the following:
direct target parameter;
intermediate quantity; and
soft information of the direct target parameter or the intermediate quantity.

Optionally, the request information includes second information, where the second information includes at least one of the following:
mobility information of the terminal;
environment information of the terminal;
precision requirement information; and
task information.

Optionally, the apparatus further includes:
a first sending module, configured to send third information to the network-side device, where the third information is used to indicate capability information of the terminal.

Optionally, the third information includes at least one of the following:
sensor configuration information of the terminal;
a data type available to the terminal; and
hardware capability information of the terminal.

Optionally, the data type includes at least one of the following:
data format information; and
data preprocessing mode.

Optionally, the apparatus further includes:
a second sending module, configured to send feedback information to the network-side device, where the feedback information is used to indicate whether the terminal supports a model corresponding to the model configuration information.

Optionally, the apparatus further includes:
a third sending module, configured to send fifth information to the network-side device, where the fifth information includes at least one of the following:
mobility information of the terminal;
environment information of the terminal;
precision requirement information; and
task information.

Optionally, the apparatus further includes:
a fourth sending module, configured to send sixth information to the network-side device, where the sixth information is used to indicate capability information of the terminal.

Optionally, the sixth information includes at least one of the following:
sensor configuration information of the terminal;
a data type available to the terminal; and
hardware capability information of the terminal.

Optionally, the data type includes at least one of the following:
data format information; and
data preprocessing mode.

Optionally, the apparatus further includes:
a first receiving module, configured to receive seventh information sent by the network-side device, where the seventh information includes configuration information of the M models.

Optionally, the seventh information includes at least one of the following:
input requirements for models;
model precision information;
processing delay information; and
model life cycle information.

Optionally, the apparatus further includes:
a fifth sending module, configured to send measurement quantity information to the network-side device.

Optionally, the first prediction module 402 is configured to:
determine the prediction result of the target task based on a first fusion manner and the first result; or
determine the prediction result of the target task based on a first fusion manner, the first result, and the second result.

Optionally, the first fusion manner includes:
performing filtering on an output result of each model to obtain a prediction result; and/or
determining a prediction result based on a weight and an output result of each model.

Optionally, the apparatus further includes:
a second determining module, configured to determine the first fusion manner based on target information.

Optionally, the target information includes at least one of the following:
statistical information of an output result of each model;
statistical information of output results of a plurality of models;
model error information of each model;
mobility information of the terminal;
environment information of the terminal;
precision requirement information;
task information;
measurement quantity information input by various types of models;
model priority information;
measurement information of a reference signal of a current terminal;
model configuration information of a reference terminal; and
measurement information of a reference signal of a reference terminal.

Optionally, the apparatus further includes:
a first decision-making module, configured to make a decision associated with the target task based on the prediction result of the target task.

Optionally, the first result includes:
L output results respectively output by the L models; or a fusion result of the L output results.

Optionally, the apparatus further includes:
a second receiving module, configured to receive eleventh information sent by the network-side device, where the eleventh information is used to indicate a prediction mode based on the first result and the second result.

Optionally, the prediction mode includes any one of the following:
determining, by the network-side device, the prediction result of the target task based on the first result and the second result; and
determining, by the terminal, the prediction result of the target task based on the first result and the second result.

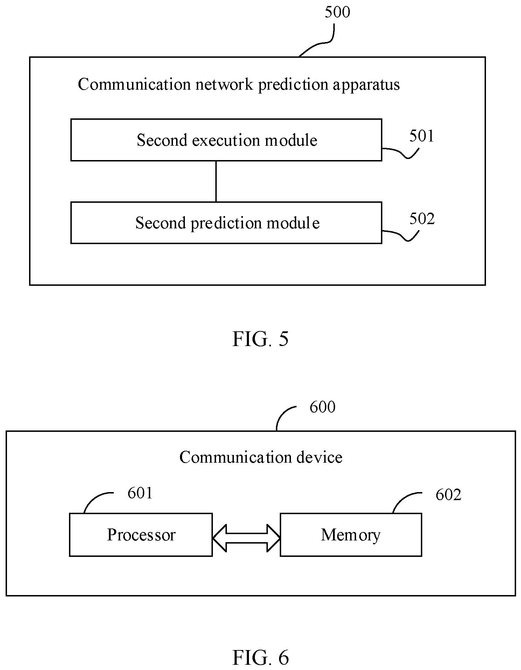

FIG. 5 is a second schematic structural diagram of a communication network prediction apparatus according to an embodiment of this application. As shown in FIG. 5, the communication network prediction apparatus 500 is applied to a network-side device and includes:
a second execution module 501, configured to perform a target task by using M models respectively and obtaining a second result output by the M models, where M is a positive integer; and
a second prediction module 502, configured to perform any one of the following operations:
   determining, by the network-side device, a prediction result of the target task based on the second result;
   sending, by the network-side device, the second result to a terminal; and
   receiving, by the network-side device, a first result sent by the terminal; and determining, by the network-side device, a prediction result of the target task based on the first result and the second result, where the first result is obtained by the terminal by performing the target task using L models respectively, L being a positive integer.

The communication network prediction apparatus in this embodiment of this application performs a same task by using a plurality of models in a communication network respectively, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

Optionally, the apparatus further includes:
a sixth sending module, configured to send first information to the terminal, where the first information includes configuration information of the L models, and the configuration information of the L models is used for determining the L models by the terminal; or
a processing module, configured to receive, for the network-side device, request information sent by the terminal, where the request information is used for requesting the network-side device to configure the L models; configuring, by the network-side device, the L models based on the request information and/or third information; and sending, by the network-side device, first information to the terminal, where the first information includes configuration information of the L models, and the configuration information of the L models is used for determining the L models by the terminal.

Optionally, the first information includes at least one of the following:
model quantity information;
model type information;
model identification ID information;
model priority information;
model attribute information;
model precision information;
model error information;
model computing capability requirement information;
model storage capacity requirement information;
model feature information;
adaptive environment information;
processing delay information;
fusion manner information for output results of models;
model life cycle information;
measurement quantity information input by various types of models; and
output information of various types of models.

Optionally, the measurement quantity information input by various types of models includes at least one of the following:
channel state information;
received signal information;
historical state information; and
sensor information.

Optionally, the output information of various types of models includes at least one of the following:
direct target parameter;
intermediate quantity; and
soft information of the direct target parameter.

Optionally, the request information includes second information, where the second information includes at least one of the following:
mobility information of the terminal;
environment information of the terminal;
precision requirement information; and
task information.

Optionally, the apparatus further includes:
a third receiving module, configured to receive third information sent by the terminal, where the third information is used to indicate capability information of the terminal.

Optionally, the third information includes at least one of the following:
sensor configuration information of the terminal;
a data type available to the terminal; and
hardware capability information of the terminal.

Optionally, the data type includes at least one of the following:
data format information; and
data preprocessing mode.

Optionally, the apparatus further includes:
a fourth receiving module, configured to receive feedback information sent by the terminal, where the feedback information is used to indicate whether the terminal supports a model corresponding to the model configuration information.

Optionally, the apparatus further includes:
a second determining module, configured to determine the M models.

Optionally, the second determining module is configured to:
configure the M models based on at least one way of autonomously determining, protocol pre-definition, or pre-configuration;
   or
select the M models from a model pool based on target information, where the model pool includes P models, P being greater than or equal to M, and P being a positive integer.

Optionally, the apparatus further includes:
a fifth receiving module, configured to receive fifth information sent by the terminal, where the fifth information includes at least one of the following:
mobility information of the terminal;
environment information of the terminal;
precision requirement information; and
task information.

Optionally, the apparatus further includes:
a sixth receiving module, configured to receive sixth information sent by the terminal; where the sixth information is used to indicate capability information of the terminal.

Optionally, the sixth information includes at least one of the following:
sensor configuration information of the terminal;
a data type available to the terminal; and
hardware capability information of the terminal.

Optionally, the data type includes at least one of the following:
data format information; and
data preprocessing mode.

Optionally, the apparatus further includes:
a seventh sending module, configured to send seventh information to the terminal, where the seventh information includes configuration information of the M models.

Optionally, the seventh information includes at least one of the following:
input requirements for models;
model precision information;
processing delay information; and
model life cycle information.

Optionally, the apparatus further includes:
a seventh receiving module, configured to receive measurement quantity information sent by the terminal.

Optionally, the second execution module is configured to perform the target task by using the M models respectively based on the measurement quantity information sent by the terminal, and obtain the second result output by the M models.

Optionally, the second prediction module is configured to:
determine the prediction result of the target task based on a second fusion manner and the second result; or
determine the prediction result of the target task based on a second fusion manner, the first result, and the second result.

Optionally, the second fusion manner includes:
performing filtering on an output result of each model to obtain a prediction result; and/or
determining a prediction result based on a weight and an output result of each model.

Optionally, the apparatus further includes:
a third determining module, configured to determine the second fusion manner based on target information.

Optionally, the target information includes at least one of the following:
statistical information of an output result of each model;
statistical information of output results of a plurality of models;
model error information of each model;
mobility information of the terminal;
environment information of the terminal;
precision requirement information;
task information;
measurement quantity information input by various types of models;
model priority information; and
measurement information of a reference signal.

Optionally, the apparatus further includes:
a second decision-making module, configured to, for the network-side device, make a decision associated with the target task based on the prediction result of the target task.

Optionally, the second result includes:
M output results respectively output by the M models, or a fusion result of the M output results.

Optionally, the apparatus further includes:
an eighth sending module, configured to send eleventh information to the terminal, where the eleventh information is used to indicate a prediction mode based on the first result and the second result.

Optionally, the prediction mode includes any one of the following:
determining, by the network-side device, the prediction result of the target task based on the first result and the second result; and
determining, by the terminal, the prediction result of the target task based on the first result and the second result.

The communication network prediction apparatus in this embodiment of the application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal 11 listed above, and other devices may be a server, a network attached storage (Network Attached Storage, NAS), and the like. This is not limited in the embodiments of this application.

The communication network prediction apparatus provided in this embodiment of this application is capable of implementing the processes implemented in the method embodiments in FIG. 1 to FIG. 3, with the same technical effects achieved. To avoid repetition, details are not described herein again.

FIG. 6 is a schematic structural diagram of a communication device according to an embodiment of this application. As shown in FIG. 6, the communication device 600 includes a processor 601, a memory 602, and a program or instructions stored in the memory 602 and executable on the processor 601. For example, when the communication device 600 is a terminal and when the program or the instructions are executed by the processor 601, the steps of the foregoing embodiments of the communication network prediction method are implemented, with the same technical effects achieved. When the communication device 600 is a network-side device and when the program or the instructions are executed by the processor 601, the steps of the foregoing embodiments of the communication network prediction method are implemented, with the same technical effects achieved. To avoid repetition, details are not described herein again.

An embodiment of this application further provides a terminal, including a processor and a communication interface. The processor is configured to:
perform a target task by using L models respectively and obtain a first result output by the L models, where L is a positive integer; and perform at least one of the following operations:
determining, by the terminal, a prediction result of the target task based on the first result;
sending, by the terminal, the first result to a network-side device; and
receiving, by the terminal, a second result sent by the network-side device; and determining, by the terminal, a prediction result of the target task based on the first result and the second result; where the second result is obtained by the network-side device by performing the target task using M models respectively, M being a positive integer.

The terminal embodiments correspond to the foregoing terminal-side method embodiments, and the implementation processes and implementations of the foregoing method embodiments can be applied to the terminal embodiments, with the same technical effects achieved.

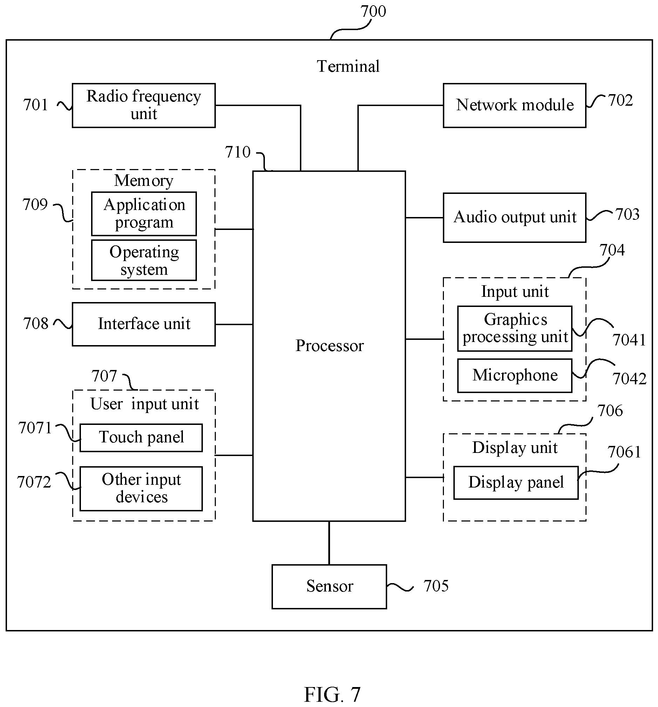

FIG. 7 is a schematic structural diagram of hardware of a terminal according to an embodiment of this application. As shown in FIG. 7, the terminal 700 includes but is not limited to at least part of components such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) supplying power to the components, and the power supply may be logically connected to the processor 710 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, and the like. The user input unit 707 may include at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or a power on/off key), a trackball, a mouse, a joystick, and the like. Details are not described herein.

In this embodiment of this application, the radio frequency unit 701 receives downlink data from a network-side device, and then sends the downlink data to the processor 710 for processing. In addition, the radio frequency unit 701 may send uplink data to the network-side device. Generally, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may include a first storage area for storing a program or instructions and a second storage area for storing data. The first storage area may store an operating system, an application program or instruction required by at least one function (for example, a sound playback function or an image playback function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read only memory (Programmable ROM, PROM), an erasable programmable read-only memory (Erasable PROM, EPROM), and an electrically erasable programmable read-only memory (Electrically EPROM, EEPROM), or flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DRRAM). The memory 709 in the embodiments of this application includes but is not limited to these and any other suitable types of memories.

The processor 710 may include one or more processing units. Optionally, an application processor and a modem processor may be integrated in the processor 710. This application processor primarily processes operations involving an operating system, user interfaces, application programs, and the like. The modem processor primarily processes radio communication signals, for example, being a baseband processor. It can be understood that the modem processor may alternatively be not integrated in the processor 710.

The processor 710 is configured to perform a target task by using L models respectively and obtain a first result output by the L models, where L is a positive integer; and perform at least one of the following operations:
determining, by the terminal, a prediction result of the target task based on the first result;
sending, by the terminal, the first result to a network-side device; and
receiving, by the terminal, a second result sent by the network-side device; and determining, by the terminal, a prediction result of the target task based on the first result and the second result; where the second result is obtained by the network-side device by performing the target task using M models respectively, M being a positive integer.

The terminal in this embodiment of this application performs a same task by using a plurality of models respectively in a communication network, and after a result corresponding to each model is obtained, results corresponding to the plurality of models are fused to obtain a prediction result of the task, so as to make a decision. In this way, decision-making can be implemented by comprehensively considering the results of the plurality of models/algorithms, which can effectively improve decision-making precision, reduce a failure probability, reduce the frequency of model switching, and implement compatible coexistence and deployment of different models.

An embodiment of this application further provides a network-side device, including a processor and a communication interface, where the processor is configured to:
perform a target task by using M models respectively and obtain a second result output by the M models, where M is a positive integer; and perform at least one of the following operations:
determining, by the network-side device, a prediction result of the target task based on the second result;
sending, by the network-side device, the second result to a terminal; and
receiving, by the network-side device, a first result sent by the terminal; and determining, by the network-side device, a prediction result of the target task based on the first result and the second result, where the first result is obtained by the terminal by performing the target task using L models respectively, L being a positive integer.

The network-side device embodiments correspond to the foregoing network-side device method embodiments, and the implementation processes and implementations of the foregoing method embodiments can be applied to the network-side device embodiments, with the same technical effects achieved.

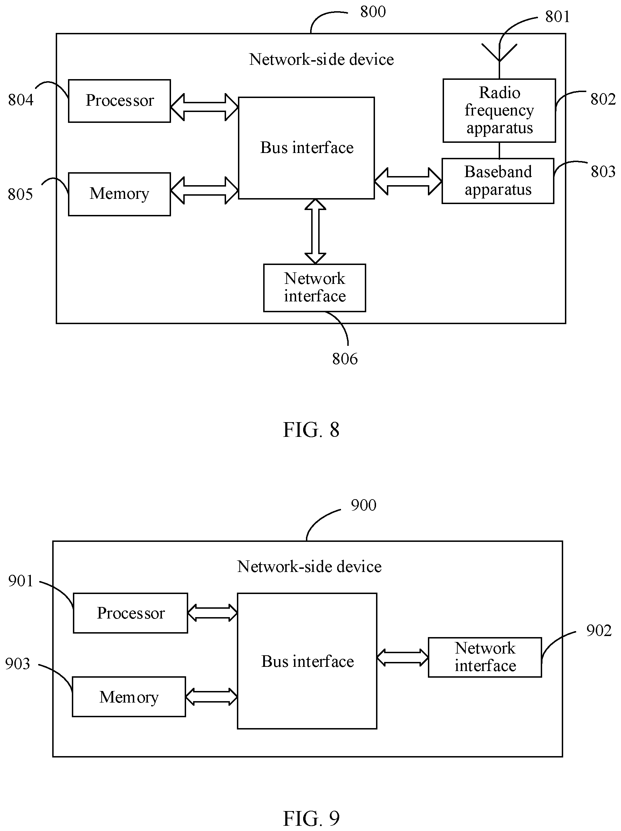

FIG. 8 is a first schematic structural diagram of a network-side device according to an embodiment of this application. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method executed by the network-side device in the foregoing embodiments can be implemented in the baseband apparatus 803, and the baseband apparatus 803 includes a baseband processor

The baseband apparatus 803 may include, for example, at least one baseband board, where a plurality of chips are disposed on the baseband board. As shown in FIG. 8, one of the chips is, for example, a baseband processor, and is connected to the memory 805 through the bus interface, to invoke a program in the memory 805 to perform the operations of the network device shown in the foregoing method embodiments.

The network-side device may further include a network interface 806, where the interface is, for example, a common public radio interface (common public radio interface, CPRI).

Specifically, the network-side device 800 in this embodiment of the present invention further includes: instructions or a program stored in the memory 805 and executable on the processor 804. The processor 804 invokes the instructions or program in the memory 805 to execute the steps of the communication network prediction method on the network-side device side, with the same technical effects achieved. To avoid repetition, details are not repeated herein.

FIG. 9 is a second schematic structural diagram of a network-side device according to an embodiment of this application. As shown in FIG. 9, the network-side device 900 includes a processor 901, a network interface 902, and a memory 903. The network interface 902 is, for example, a common public radio interface (common public radio interface, CPRI).

Specifically, the network-side device 900 in this embodiment of the present invention further includes: instructions or a program stored in the memory 903 and executable on the processor 901. The processor 901 invokes the instructions or program in the memory 903 to execute the steps of the communication network prediction method on the network-side device side, with the same technical effects achieved. To avoid repetition, details are not repeated herein.

An embodiment of this application further provides a communication network prediction system, including a terminal and a network-side device, where the terminal can be configured to execute the steps of the communication network prediction method described above, and the network-side device can be configured to execute the steps of the communication network prediction method described above.

An embodiment of this application further provides a readable storage medium. The readable storage medium may be volatile or non-volatile. A program or instructions are stored in the readable storage medium. When the program or the instructions are executed by a processor, the processes of the foregoing embodiment of the communication network prediction method can be implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the embodiments of the communication network prediction method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the embodiments of the communication network prediction method, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A communication network prediction method, comprising:
performing, by a terminal, a target task by using L models respectively and obtaining a first result output by the L models, wherein L is a positive integer; and
performing, by the terminal, any one of the following operations:
determining, by the terminal, a prediction result of the target task based on the first result;
sending, by the terminal, the first result to a network-side device; and
receiving, by the terminal, a second result sent by the network-side device; and determining, by the terminal, a prediction result of the target task based on the first result and the second result, wherein the second result is obtained by the network-side device by performing the target task using M models respectively, M being a positive integer.

2. The method according to claim 1, wherein the method further comprises:
determining, by the terminal, the L models.

3. The method according to claim 2, wherein the determining, by the terminal, the L models comprises any one of the following:
receiving, by the terminal, first information sent by the network-side device, wherein the first information comprises configuration information of the L models; and determining, by the terminal, the L models based on the configuration information of the L models;
sending, by the terminal, request information to the network-side device, wherein the request information is used for requesting the network-side device to configure the L models; receiving, by the terminal, the first information sent by the network-side device, wherein the first information comprises configuration information of the L models; and determining, by the terminal, the L models based on the configuration information of the L models;
configuring, by the terminal, the L models based on at least one way of autonomously determining and informing the network-side device, protocol pre-definition, or higher-layer pre-configuration; and
selecting, by the terminal, the L models from a model pool based on target information, wherein the model pool comprises K models, K being greater than or equal to L, and K being a positive integer.

4. The method according to claim 3, wherein the first information comprises at least one of the following:
model quantity information;
model type information;
model identification ID information;
model priority information;
model attribute information;
model precision information;
model error information;
model computing capability requirement information;
model storage capacity requirement information;
model feature information;
adaptive environment information;
processing delay information;
fusion manner information for output results of models;
model life cycle information;
measurement quantity information input by various types of models; and
output information of various types of models.

5. The method according to claim 4, wherein the measurement quantity information input by various types of models comprises at least one of the following:
channel state information;
received signal information;
historical state information; and
sensor information.

6. The method according to claim 4, wherein the output information of various types of models comprises at least one of the following:
direct target parameter;
intermediate quantity; and
soft information of the direct target parameter or the intermediate quantity.

7. The method according to claim 3, wherein the request information comprises second information, wherein the second information comprises at least one of the following:
mobility information of the terminal;
environment information of the terminal;
precision requirement information; and
task information.

8. The method according to claim 3, wherein the method further comprises:
sending, by the terminal, third information to the network-side device, wherein the third information is used to indicate capability information of the terminal.

9. The method according to claim 8, wherein the third information comprises at least one of the following:
sensor configuration information of the terminal;
a data type available to the terminal; and
hardware capability information of the terminal.

10. The method according to claim 9, wherein the data type comprises at least one of the following:
data format information; and
data preprocessing mode.

11. The method according to claim 3, wherein after the receiving, by the terminal, first information sent by the network-side device, the method further comprises:
sending, by the terminal, feedback information to the network-side device, wherein the feedback information is used to indicate whether the terminal supports a model corresponding to the model configuration information.

12. The method according to claim 1, wherein the method further comprises:
sending, by the terminal, fifth information to the network-side device, wherein the fifth information comprises at least one of the following:
mobility information of the terminal;
environment information of the terminal;
precision requirement information; and
task information.

13. The method according to claim 1, wherein the method further comprises:
sending, by the terminal, sixth information to the network-side device, wherein the sixth information is used to indicate capability information of the terminal.

14. The method according to claim 13, wherein the sixth information comprises at least one of the following:
sensor configuration information of the terminal;
a data type available to the terminal; and
hardware capability information of the terminal.

15. The method according to claim 14, wherein the data type comprises at least one of the following:
data format information; and
data preprocessing mode.

16. The method according to claim 1, wherein the method further comprises:
receiving, by the terminal, seventh information sent by the network-side device, wherein the seventh information comprises configuration information of the M models.

17. The method according to claim 16, wherein the seventh information comprises at least one of the following:
input requirements for models;
model precision information;
processing delay information; and
model life cycle information.

18. The method according to claim 17, wherein the method further comprises:
sending, by the terminal, measurement quantity information to the network-side device.

19. The method according to claim 1, wherein the determining, by the terminal, a prediction result of the target task based on the first result comprises: determining, by the terminal, the prediction result of the target task based on a first fusion manner and the first result; or
the determining, by the terminal, a prediction result of the target task based on the first result and the second result comprises: determining, by the terminal, the prediction result of the target task based on a first fusion manner, the first result, and the second result.

20. The method according to claim 19, wherein the first fusion manner comprises:
performing filtering on an output result of each model to obtain a prediction result; and/or
determining a prediction result based on a weight and an output result of each model.

21. The method according to claim 19, wherein the method further comprises:
determining, by the terminal, the first fusion manner based on target information.

22. The method according to claim 3 or 21, wherein the target information comprises at least one of the following:
statistical information of an output result of each model;
statistical information of output results of a plurality of models;
model error information of each model;
mobility information of the terminal;
environment information of the terminal;
precision requirement information;
task information;
measurement quantity information input by various types of models;
model priority information;
measurement information of a reference signal of a current terminal;
model configuration information of a reference terminal; and
measurement information of a reference signal of a reference terminal.

23. The method according to claim 1, wherein the method further comprises:
making, by the terminal, a decision associated with the target task based on the prediction result of the target task.

24. The method according to claim 1, wherein the first result comprises:
L output results respectively output by the L models; or a fusion result of the L output results.

25. The method according to claim 1, wherein the method further comprises:
receiving, by the terminal, eleventh information sent by the network-side device, wherein the eleventh information is used to indicate a prediction mode based on the first result and the second result.

26. The method according to claim 25, wherein the prediction mode comprises any one of the following:
determining, by the network-side device, the prediction result of the target task based on the first result and the second result; and
determining, by the terminal, the prediction result of the target task based on the first result and the second result.

27. A communication network prediction method, comprising:
performing, by a network-side device, a target task by using M models respectively and obtaining a second result output by the M models, wherein M is a positive integer; and
performing, by the network-side device, any one of the following operations:
determining, by the network-side device, a prediction result of the target task based on the second result;
sending, by the network-side device, the second result to a terminal; and
receiving, by the network-side device, a first result sent by the terminal; and determining, by the network-side device, a prediction result of the target task based on the first result and the second result, wherein the first result is obtained by the terminal by performing the target task using L models respectively, L being a positive integer.

28. The method according to claim 27, wherein the method further comprises:
sending, by the network-side device, first information to the terminal, wherein the first information comprises configuration information of the L models, and the configuration information of the L models is used for determining the L models by the terminal; or
receiving, by the network-side device, request information sent by the terminal, wherein the request information is used for requesting the network-side device to configure the L models; configuring, by the network-side device, the L models based on the request information and/or third information; and sending, by the network-side device, first information to the terminal, wherein the first information comprises configuration information of the L models, and the configuration information of the L models is used for determining the L models by the terminal.

29. The method according to claim 28, wherein the first information comprises at least one of the following:
model quantity information;
model type information;
model identification ID information;
model priority information;
model attribute information;
model precision information;
model error information;
model computing capability requirement information;
model storage capacity requirement information;
model feature information;
adaptive environment information;
processing delay information; and
fusion manner information for output results of models;
model life cycle information;
measurement quantity information input by various types of models; and
output information of various types of models.

30. The method according to claim 27, wherein the method further comprises:
determining, by the network-side device, the M models.

31. The method according to claim 30, wherein the determining, by the network-side device, the M models comprises:
configuring, by the network-side device, the M models based on at least one way of autonomously determining, protocol pre-definition, or pre-configuration;
or
selecting, by the network-side device, the M models from a model pool based on target information, wherein the model pool comprises P models, P being greater than or equal to M, and P being a positive integer.

32. The method according to claim 30, wherein the method further comprises:
receiving, by the network-side device, fifth information sent by the terminal, wherein the fifth information comprises at least one of the following:
mobility information of the terminal;
environment information of the terminal;
precision requirement information; and
task information.

33. The method according to claim 30, wherein the method further comprises:
receiving, by the network-side device, sixth information sent by the terminal; wherein the sixth information is used to indicate capability information of the terminal.

34. The method according to claim 30, wherein the method further comprises:
sending, by the network-side device, seventh information to the terminal, wherein the seventh information comprises configuration information of the M models.

35. The method according to claim 34, wherein the method further comprises:
receiving, by the network-side device, measurement quantity information sent by the terminal.

36. The method according to claim 35, wherein the performing, by a network-side device, a target task by using M models respectively and obtaining a second result output by the M models comprises:
performing, by the network-side device, the target task by using the M models respectively based on the measurement quantity information sent by the terminal, and obtaining the second result output by the M models.

37. The method according to claim 27, wherein the determining, by the network-side device, a prediction result of the target task based on the second result comprises: determining, by the network-side device, the prediction result of the target task based on a second fusion manner and the second result; or
the determining, by the network-side device, a prediction result of the target task based on the first result and the second result comprises: determining, by the network-side device, the prediction result of the target task based on a second fusion manner, the first result, and the second result.

38. The method according to claim 37, wherein the second fusion manner comprises:
performing filtering on an output result of each model to obtain a prediction result; and/or
determining a prediction result based on a weight and an output result of each model.

39. The method according to claim 37, wherein the method further comprises:
determining, by the network-side device, the second fusion manner based on target information.

40. The method according to claim 31 or 39, wherein the target information comprises at least one of the following:
statistical information of an output result of each model;
statistical information of output results of a plurality of models;
model error information of each model;
mobility information of the terminal;
environment information of the terminal;
precision requirement information;
task information;
measurement quantity information input by various types of models;
model priority information; and
measurement information of a reference signal.

41. The method according to claim 27, wherein the method further comprises:
making, by the network-side device, a decision associated with the target task based on the prediction result of the target task.

42. The method according to claim 27, wherein the second result comprises:
M output results respectively output by the M models, or a fusion result of the M output results.

43. The method according to claim 27, wherein the method further comprises:
sending, by the network-side device, eleventh information to the terminal, wherein the eleventh information is used to indicate a prediction mode based on the first result and the second result.

44. The method according to claim 43, wherein the prediction mode comprises any one of the following:
determining, by the network-side device, the prediction result of the target task based on the first result and the second result; and
determining, by the terminal, the prediction result of the target task based on the first result and the second result.

45. A communication network prediction apparatus, comprising:
a first execution module, configured to perform a target task by using L models respectively and obtain a first result output by the L models, wherein L is a positive integer; and
a first prediction module, configured to perform any one of the following operations:
determining, by a terminal, a prediction result of the target task based on the first result;
sending, by the terminal, the first result to a network-side device; and
receiving, by the terminal, a second result sent by the network-side device; and determining, by the terminal, a prediction result of the target task based on the first result and the second result; wherein the second result is obtained by the network-side device by performing the target task using M models respectively, M being a positive integer.

46. A communication network prediction apparatus, comprising:
a second execution module, configured to perform a target task by using M models respectively and obtain a second result output by the M models, wherein M is a positive integer; and
a second prediction module, configured to perform any one of the following operations:
determining, by the network-side device, a prediction result of the target task based on the second result;
sending, by the network-side device, the second result to a terminal; and
receiving, by the network-side device, a first result sent by the terminal; and determining, by the network-side device, a prediction result of the target task based on the first result and the second result, wherein the first result is obtained by the terminal by performing the target task using L models respectively, L being a positive integer.

47. A terminal, comprising a processor and a memory, and the memory stores a program or instructions executable on the processor, wherein when the program or the instructions are executed by the processor, the steps of the communication network prediction method according to any one of claims 1 to 26 are implemented.

48. A network-side device, comprising a processor and a memory, and the memory stores a program or instructions executable on the processor, wherein when the program or the instructions are executed by the processor, the steps of the communication network prediction method according to any one of claims 27 to 44 are implemented.

49. A readable storage medium, wherein the readable storage medium stores a program or instructions, and when the program or the instructions are executed by a processor, the communication network prediction method according to any one of claims 1 to 26 are implemented, or the communication network prediction method according to any one of claims 27 to 44 are implemented.
